# EUROPEAN PATENT APPLICATION

(11) **EP 1 168 765 A2**
(43) Date of publication of application: **02.01.2002**
(21) Application number: 01304318.7
(22) Date of filing: 15.05.2001
(51) Int. Cl.: H04L 29/06, G06F 17/30, G06F 9/44

(54) **System and method for storing bookmarks and history information spatially on a display**

(30) Priority: 30.06.2000 US 607276; 08.11.2000 US 707887
(71) Applicant: Nokia Corporation, 00045 Espoo (FI)
(72) Inventor: Asala, Arto, 01360 Vantaa (FI); Wilstedt, Charlotta, 582 46 Linkoping (SE); Davidsson, Marcus, 582 24 Linkoping (SE); Mansikkaniemi, Tapio, 02760 Espoo (FI); Ylonen, Otso, 24100 Salo, (FI)
(74) Representative: Read, Matthew Charles

(57) **Abstract**

A system and method are provided for a user to perform information management tasks and access the Internet. The system includes at least one terminal with the ability to provide spatial orientation for storage of information, which will assist a user in recalling the content of the information. The system is part of a group and capable of wireless communication. The system also includes a gateway, an Internet Service Provider (ISP), a server for authenticating the terminal, and a global unit for providing the internet address of the server to the terminal. The method includes retrieving a desired web page, and storing the web page as a bookmark on the display in a desired region of the display, such that the spatial location and orientation of the bookmark on the display acts a reminder of the content of the bookmark.

## Description

### FIELD OF THE INVENTION

This invention relates generally to communication devices and, more specifically, to mobile terminals with bookmark and history stored geographically.

### BACKGROUND

Known methods of providing access to the Internet include connecting to the Internet through an Internet Service Provider (ISP). Typically, a user selects one ISP and uses that ISP to gain access to the Internet. In order to gain access to the Internet through the ISP, the user must have a terminal capable of connecting to the ISP. Additionally, the terminal must also have the ability to retrieve information from the Internet. Often when the user finds a desired web page, the user will bookmark that web page for later retrieval.

For example, a typical Personal Computer (PC) has a communication port with a communication device, such as a modem, that can connect to the selected ISP via a landline. Once connected to the ISP, the PC has an Internet navigational tool, such a web browser, stored in the PC's memory, which the user uses to navigate through the Internet to retrieve and display, on a typical monitor, the desired information. If the user decides to bookmark that particular web page, then a bookmark will be created. Examples of bookmarks and how bookmarks are created is set forth in US Patent No. 5,963,964 issued on October 5, 1999 to Nielsen, the content of which is incorporated herein by reference. In addition to bookmarks, the PC keeps a history of the web pages visited by using each web page's Universal Resource Locator (URL).

The limitation associated with such a system is being able to provide an effective means for easy recall for the user of the information stored since the information is stored in the form of a textual or visual bookmark. The user must then access the list and select from that list of textual or visual bookmarks the desired web page. Given that people remember the geographically orientated materials better, a list is not the most effective means of presenting information to user because lists place things in order based on some organizational rule, such as alphabetical or sequential.

Therefore, what is needed is a means for storing bookmarks and history information for web pages visited that organizes information in manner that is most easily recalled by the user.

### SUMMARY

A system and method are set forth that provide for spatial organization of bookmarks and history on a mobile terminal with information management and Internet accessibility. The system includes a driver resident on hardware circuitry, a display coupled to the circuitry having a viewable area for visual display of data, wherein the viewable area is divided into regions that can be used for spatial orientation of information, and a server coupled to the gateway.

The method includes retrieving a desired web page, and storing the web page as a bookmark on the display in a desired region of the display, such that the spatial location and orientation of the bookmark on the display acts a reminder of the content of the bookmark.

An advantage to the present system and method is that the user is provided with spatial references and orientation for stored thumbnails containing information, which will aid in recalling the content of the thumbnails.

### BRIEF DESCRIPTION OF THE DRAWINGS

Fig. 1 is a block diagram representation of a communication network having mobile terminals that are capable of communicating with a system having a server with related services.
Fig. 2 is a more detailed block diagram representation of the server of the system of the network of Fig.1.
Fig. 3A is a more detailed block diagram of a mobile terminal, which shows the spatial storage of bookmarks and history on the display with a toolbar, operating within the system of Fig. 1.
Fig. 3B is a more detailed block diagram of a mobile terminal, which shows the spatial storage of bookmarks and history on the display, operating within the system of Fig. 1.
Fig. 4 is a flowchart of the process for establishing a shared session and an individual session between the mobile terminal and the server of Fig. 1.
Fig. 5 is a flowchart of the process for establishing a communication link between the mobile terminal and the server.

### DETAILED DESCRIPTION

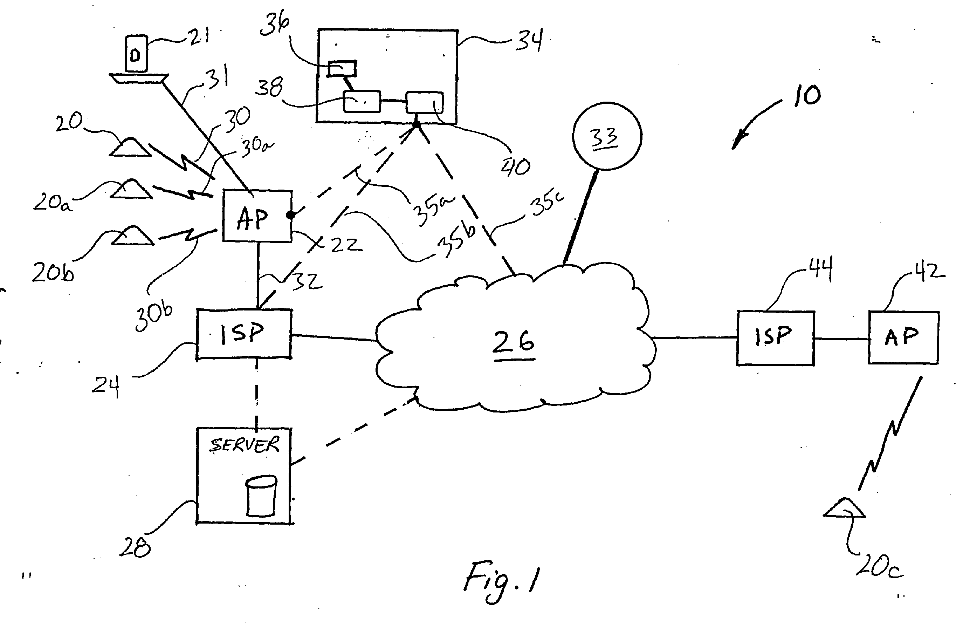

Referring now to Fig. 1, a network 10 includes a terminal 20 coupled to an access point 22. The access point 22 is coupled to an Internet Service Provider (ISP) 24, which is coupled to an Internet 26. Accordingly, the access point 22 has an internet address relative to the internet address of the ISP 24. Additionally, in one embodiment, the ISP 24 is coupled to a server 28 that provides the user, through the terminal 20, with specific services and features, which will be discussed in detail herein. In another embodiment, the server 28 is coupled directly to the internet 26 and, hence, the terminal 20 would access the server 28 through the internet 26.

The terminal 20 may be a mobile hand held radio telecommunications device which may include a virtual keyboard, a two-fingered navigational tool, a two-fingered pressure sensitive special click-drag-drop feature, and a Graphical User-Interface (GUI). The server 28 provides services such as email, calendar, notes, ability to shop on line and necessary authentication, as well as third party services and information.

Terminals 20, 20a, and 20b are coupled to the access point 22 via wireless connections 30, 30a, and 30b, respectively, and, hence, the user has portable or mobile access to the Internet 26 and the services provided by the server 28. Additionally, a personal computer (PC) terminal 21 is coupled to the access point 22 via a landline 31. The terminal 21 can be used to access the server 28 using special authentication by any user authorised to access the information and services provided by the server 28. However, the authentication for the user using the terminal 21, which is discussed herein, is slightly different from the authentication procedure for the terminals 20, 20a, 20b, and 20c. More specifically, the terminal 20 is coupled to the access point 22 using a Wireless Local-Area-Network Gateway (WLAN GW) that is installed at a specific location, such as the user's premises or location. In the preferred embodiment, the WLAN GW interface uses Ethernet 802.11 transfer protocol. However, other wireless interface protocols, such as GPRS of Global System for Mobile Communications (GSM+), Universal Mobile Telecommunication Systems (UMTS), or other LAN, may be used without limiting the sprite and scope of the present invention as set forth in the claim. If the terminal 20 is powered on and within range of the access point 22, then Ethernet protocol is used as a transfer protocol in order to establish and maintain a communication link.

Although the preferred embodiment shows the terminal 20 coupled to the server 28 through the ISP 24, the scope of the present invention, as set forth in the claims, is not limited thereby. For example, the terminal 20 may be coupled directly to the server 28 through the access point 22. Regardless of how the terminal 20 is coupled to the server 28, once the terminal 20 is authenticated, as will be discussed herein, it can function as an Internet browser to access the Internet 26 with the additional ability to retrieve services and information from the server 28. Furthermore, in the embodiment set forth herein, the ISP 24 is separate from and not acting as the server 28 and vice versa, even though it is possible to combine them into one unit.

It will be apparent to those skilled in the art that even though the preferred embodiment shows that the access point 22 is coupled to the ISP 24 through a landline 32, the scope of the present invention as set forth in the claims is not limited thereby. For example, the access point 22 can be wirelessly coupled to the ISP 24. Thus, in the preferred embodiment, the terminal 20 accesses the ISP 24 through the access point 22 and, thus, the user can access, navigate through, and retrieve information from the Internet 26 using the terminal 20.

In order for a terminal, such as terminal 20, to have access to the services of the server 28, the server 28 must authenticate and authorise the terminal's access. Although only the authentication and authorisation procedure relating to the terminal 20 are discussed in detail, the teachings set forth herein are also applicable to other terminals. Upon proper authentication of the terminal 20 the user can access the services of the server 28 at the authorised level of authentication.

Generally stated, if the terminal 20 is powered on and authenticated by the server 28, then information or services from the server 28 are downloaded to the terminal 20. The server 28 downloads information, such as profile settings for the group. One profile setting that can be downloaded is language preferences for a shared communication session. Other information or services may include configuration data, driver or application related software or portions thereof, configurable parameters, partial sections of system software, or configurable parameters depending on the level of authentication that has occurred with respect to the user. Additionally, the terminal can have access through proper authentication and service purchases to third party publications available from a content provider or vendor 33, such as news related information found in magazine publications or the daily newspaper. It will be apparent to those skilled in the art that the information may be purchased by the user and then transmitted by the vendor 33 upon request of the user's group at the server 28 and then to all terminals within the group of the terminal 20; alternatively, the information could be purchased by an operator/owner of the services provided by the terminal 28 and then resold to each group as requested. Thus, a group profile can also include access to the information services of the vendor 33 that can be made available to the group or just the user, depending on the authentication.

There are two levels of authentication that provide access to the services and information of the server 28: the group level and the individual level. The group level is a level of authentication that occurs based on the identity of the terminal 20 in order to initiate a shared session. In order to create a group, at least one terminal is needed, but typically there are several terminals that make up a group, such as terminals 20a, 20b, and 20c, and each terminal has a unique identity that allows that terminal access to a shared session at the group level. Furthermore, each group includes a specific group profile and this group profile is downloaded during a shared session from the server 28. Thus, anyone having access to the terminal 20 would have access to the group level information and services, such as calendar, e-mail, bookmarks, cookies, and e-publication, all of which are set up for the group. As will be discussed herein, these same services may be available to the user at the individual level, but the content of the information would vary. The server 28 includes storage capacity for storing data related to the group in a group specific storage unit that can be accessed and used by all terminals within the group once the terminal has been authenticated and the shared session initiated.

In the preferred embodiment, the group level authentication is based on the identity of the hardware of the terminal 20 and the authentication occurs automatically to initiate the shared session once the terminal 20 is powered on. Even though the authentication at the group level occurs automatically, the scope of the invention as set forth in the claims is not limited thereby. For example, the terminal 20 could request input from the user in order to initiate the group level authentication process. Once the terminal 20 is authorised to access the services, then each user of the terminal 20 is able to access information and services that are available to all users in the group as well as initiate an individual communication session to access individual information and services available only to that user, provided the user has a profile associated with group associated with the terminal that has established the shared session that is in progress.

Unlike the shared session at the group level, an individual session at the individual level is a level of authentication that requires input from the user to allow the user of a terminal, such as the terminal 20 or the terminal 20c, access to information intended only for that user. For example, the user could use any terminal that is within the user's group and initiate an individual session to access information and services specific to that user. The authentication can be done using anything that is unique and only known by that user, such as a password. Thus, the user can initiate an individual session regardless of which terminal is being used. When the user activates an individual session then configuration parameters, which are specific to the user, are downloaded to the terminal 20. Although in the preferred embodiment a user must have a profile associated with the same group that the terminal's profile is associated, the scope and sprite of the present invention is not limited thereby. For example, the network 10 could be set up to allow a user access from any terminal regardless of the association between the user, the terminal 20, and the group as long as the user can be authenticated by the server 28. This is similar to the way a user would gain access to the server 28 from the terminal 21.

As indicated above, anyone having access to the terminal 20 would have access to the group level information and services, because authentication is based on the terminal 20 and occurs automatically and the shared session is always active when the terminal 20 is powered on. Even though any user of the terminal 20 can have access to information and services at the group level, only a designated user can change the group or take actions on behalf of the group. In the preferred embodiment, one or two users within the group are typically designated to have administrative rights for the group. The user/users with administrative rights are called a group administrator. The group administrator has the right to alter group profiles and the information related to the group administrator is stored in the server 28 and administration access can be authenticated by a password. The group administrator, once authenticated, can alter the group profile settings, add or delete terminal profiles form the group profile, and add or delete user profiles form the group profile.

One group setting that the group administrator can select is the language setting for the shared sessions. However, each user can select his or her own language preference for the individual sessions. For example, in a multilingual group the group language can be one specific language, while the language for each user may be different during the individual session for that user. Then depending on the session type, which is either family or individual, the terminal 20 will show text in the selected language, which is established in the group or individual profile, respectively.

Additionally, the group administrator can have access to purchasing services that may require the ordering party to be of legal age for the purpose of ordering or purchasing additional services, such as news or publication services. Thus, while all users of the terminal would have access to group level services, such as access to the Internet, they would not be able to make administrative decision, unless they were authenticated as the group administrator. Accordingly, the group is protected from unauthorised or unwanted alteration of group profile as well as financial commitments from occurring at the group level from the terminal 20, especially given that the identity of the user of the terminal 20 is not unknown at the group level yet that user has access to the server 28 as well as the internet 26 through the terminal 20 coupled to the ISP 24.

Continuing with Fig. 1, in addition to the ISP 24, the access point 22 is also coupled to a global unit or content provider 34. In one embodiment, the access point 22 may communicate with the content provider 34 through a link 35a. Alternatively, the access point 22 may be communicated with the content provider 34 through a landline 32, the ISP 24, and a link 35b. In yet another alternative, the access point 22 may communicate with the content provider 34 through a landline 32, the ISP 24, the Internet 26, and a link 35c.

The content provider 34 includes a global address server 36, a global upgrade server 38, and a firewall unit 40. It will be apparent to those skilled in the art that the firewall unit 40 functions to provide secured access to the global address server 36 and the global upgrade server 38.

In the preferred embodiment, the internet address of the business unit 34 with the global address server 36 is permanently contained in the memory of the terminal 20. Even though reference is made hereinafter only to the internet address of the global address server 36 without specific reference to the internet address of the content provider 34, it will be apparent to those skilled in the art that the internet addresses for the two may be the same or could be slightly different depending on configuration parameters. The global address server 36 is a place from which all the terminals, such as terminals 20, 20a, 20b, and 20c, can fetch the internet address of their respective server. The advantage of having the terminal 20 store the internet address of the global address server 36 is that if the terminal 20 was relocated near another access point, then the terminal 20 can still obtain the internet address location of the server 28 simply by knowing the internet address of the global address server 36. However, the scope of the invention as set forth in the claims is not limited thereby. For example, the internet address of the server 28 could be stored on the terminal 20 and the memory of the terminal 20 could be updated as needed.

An advantage to storing the internet address of the global address server 36 on the terminal 20 is that the association between terminal and server as well as changes in the internet address of servers can be easily and efficiently updated without having to update the memory of each terminal. The global update server 38 updates the global address server 36 each time there is a change in the association between terminal and server, when there are new terminals to associate with a server, or if the internet address of a particular server is changed.

With the internet address of the global address server 36 stored in the memory of the terminal 20, the terminal 20 is able to request and retrieve the internet address of the server 28 from the global address sever 36. The global address server 36 stores information about the location of the server 28 and all other servers in the network and the corresponding relation between each terminal and its server. Thus, the terminal 20 is always able to obtain the address of the server 28, which is the server designed to serve the terminal 20. For example, the terminal 20c coupled through an access point 42 to an ISP 44 can retrieve the internet address of the server 28 from the global address server 36, provided that the server 28 is the server designated to serve the terminal 20c and that the terminal 20c is authenticated by the server 28 as an authorized user of the services.

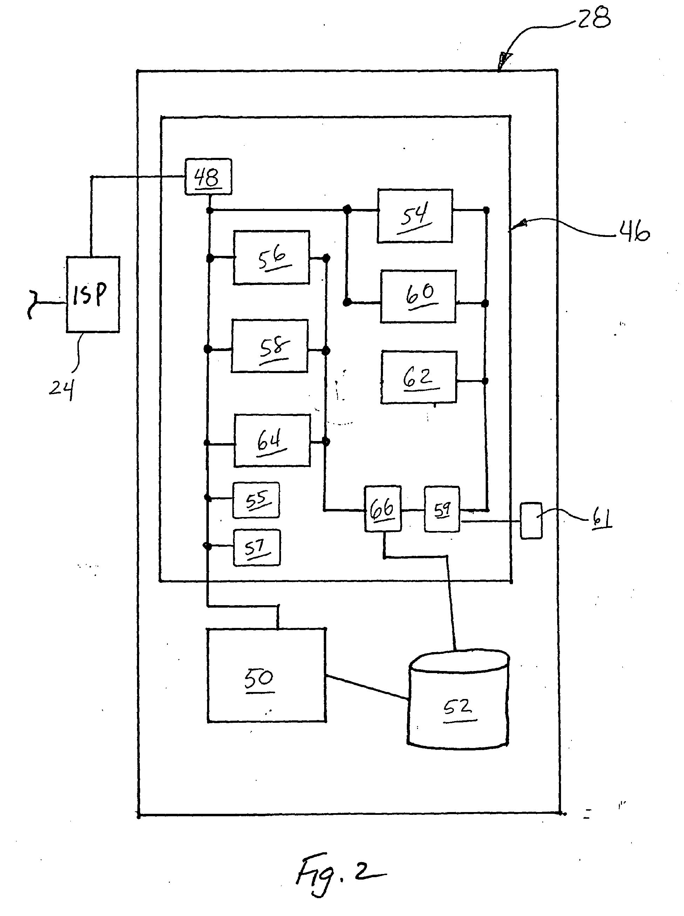

Referring now to Fig 2, the server 28 includes a support server 46, a response handler or application server 48, a network application server 50, and a directory server 52. It will be apparent to those skilled in the art that the referenced connections do not depict the physical connections between the logical elements; the emphasis is merely on the logical connections. The support server 46 provides services oriented towards enabling and supporting the services provided to the terminal 20. The support server 46 includes an upgrade service unit 54, a bookmark service database unit 55, a login services unit 56, a bookmark database 57, a profile services unit 58, a client log unit 59 for collecting information about clients, an advertisement services unit 60, a system log unit 61 for collecting information about events in the server 28 from the client log unit 59, an administrative services unit 62, a defined services unit 64, and a directory client unit 66.

The upgrade services unit 54 is a specific means for controlled software upgrade of the software for the support server 46. Updates are transmitted from the global upgrade server 38 to the upgrade service unit 54. The login services unit 56 provides the means for authentication of the user and the terminal 20 that is being used to access the services based on information provided by the client unit 66. Additionally, the login services unit 56 is also responsible for log-off activities, such as individual session termination. The profile services unit 58 provides a means for modifying a user's profile information, e.g. group and individual information and preferences. The administration services unit 62 provides a means for administration of the support server 46 and the application server 48. The advertisement services unit 60 provides a means for the server 28 to tailor advertisements to the user and the terminal 20 according to the user's profile information. The defined services unit 64 is a classification of 'other services' containing items like bookmark management services, help services, log services, name management services, and general management services. The directory client unit 66 is coupled to the directory server 52 to provide client verification.

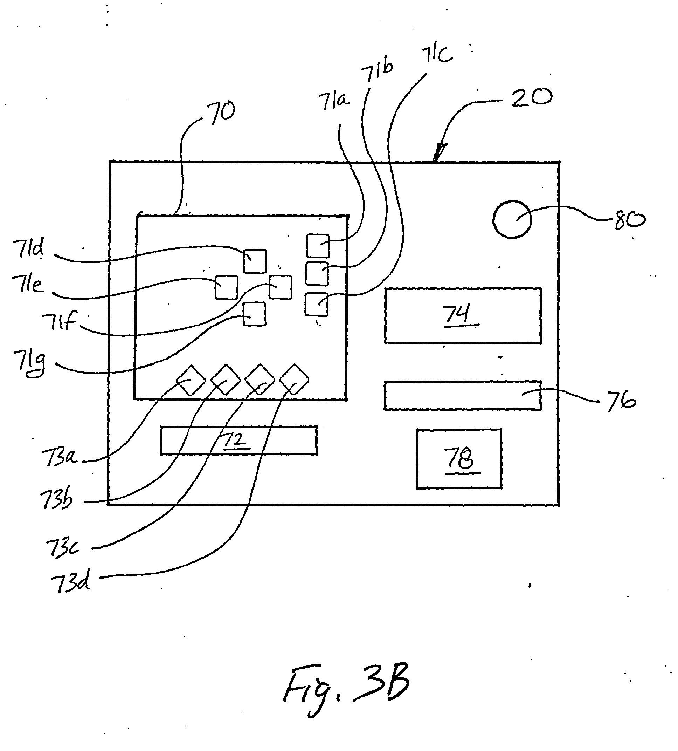

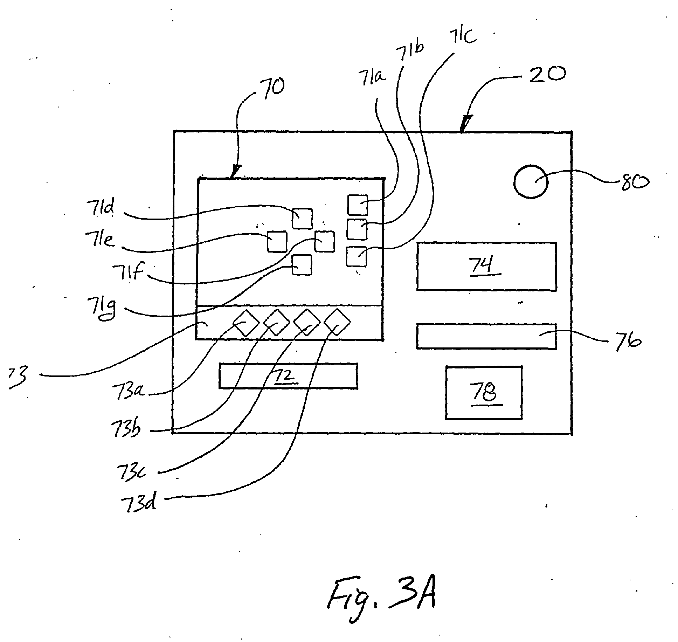

Referring now to Figs. 3A and 3B, the terminal 20 includes a display 70, a user interface (UI) framework 72, a browser 74, a driver 76, and hardware 78. Each element is shown here for reference only and the location of each element is not intended to be a defined location of one element relative to the other elements. For example, the user interface 72 may be located in the display, as a part of the display, or independent of the display. The display 70 is spatially divided for visual storage of thumbnails 71a - 71g of the bookmarks selected by the user. In one embodiment, the display 70 in Fig. 3A includes a tool bar portion 73 that contains history 73a - 73d of various web pages or URLs visited. In another embodiment, the spatial structure of the display 70 is used to store the history 73a - 73d of various web pages or URLs visited. It will be apparent to those skilled in the art that various ways can be used to generate thumbnails of the bookmarks and the history. With respect to the present embodiment, a view of the display 70 illustrates thumbnails 71a, 71b, and 71c stored on the display in a vertical orientation in the upper right hand portion of the display 70. Thus, the user has a visual display of the thumbnails of the bookmarks, which are spatially organised in a vertical manner. Similarly, the user has selected to organise and group the bookmarks 71d, 71e, 71f, and 71g in another portion of the display 70 in accordance with a polar spatial organizational scheme. It will be apparent to those skilled in the art that the any spatial organizational scheme can be utilised in response to how the spatial division of the area of the display 70. Thus, the user's ability to recall the content of a bookmark is greatly enhanced, even if the bookmark does not include textual reference to its content because of the spatial location of the bookmark relative to other bookmarks.

Similarly, the thumbnails of the history 73a, 73b, 73c, and 73d can be spatially organised. For example, the history 73a, 73b, 73c, and 74d are organised linearly and include a thumbnail snap shot of the pages visited. In the preferred embodiments, latest history is visually shown as a snapshot in a selected spatial area of the display 70 and selecting a history item will show the content of the page as it was when history information was collected and stored. Thus, spatial organization is utilised so that the user can easily select the desired history thumbnail corresponding to the web page that the user wants to re-visit. The visual thumbnails of each history includes the URL address of the selected Internet address object, which may be shown as a hint. The spatial position of each thumbnail on the display 70 as well as what information is stored about each web page, depending on whether it is bookmark or history, is defined by the user and controlled by the driver 76.

The driver 76 resides in the memory of the hardware 78 along with other data, such as the internet address of the global address server 36 and software, such as the browser 74. As the terminal 20 is turned on, the driver 76 retrieves data relating to the internet address of the global address server 36. In the preferred embodiment, the driver 76 is EPOC6, which is an operating system software that handles hardware related functions in the terminal as well as offer a functioning environment to the application layer programs. Once the terminal 20 is power on, it is coupled to the access point 22 and the ISP 24. Thus, the terminal 20 is able to obtain its own internet address.

Using the internet address of the global address server 36, the terminal 20 is coupled to the global address server 36 and sends a request in order to obtain the internet address of the server 28. Once the terminal 20 has the internet address of its server 20, it is then coupled to the server 28. The server 28 authenticates, using the unique identity of the hardware 78 of the terminal 20, that the terminal 20 has shared level access privileges. Accordingly, the terminal 20 is authenticated and logged onto the server 28 to begin a shared session at a shared level. Thus, the user can now access services or retrieve information from the server 28 or the Internet 26. In order for the user to initiate an individual session and retrieve individual information, the user must use the terminal 20 and provide further authentication to the server 28 to gain access at the individual level. It will be apparent to those skilled in the art that at either the shared level or the individual level, the user is able to the retrieve the information related to the group of users as well as browse the Internet 26 to retrieve information.

The browser 74 is a typical browser and includes such features as Hyper-Text Transfer Protocol (HTTP), JAVA script, and cascade style sheet capability. As with typical Personal Computers (PCs), the browser 74 helps the user to navigate through and retrieve information from the Internet once the user is connected to the ISP 24 through the terminal 20. The user utilises the terminal 20 to connect to both the ISP 24 and the server 28 using authentication protocol as discussed in detail herein. The terminal 20 is the primary means of access by the user to the server 28 and the related services and applications. However, the user can also access the ISP 24 and the server 28 using the terminal 21 or non-mobile terminal using appropriate shared level authentication initiated manually.

In order to retrieve information or request services from the server 28 or the Internet 26, the user provides input through the UI framework 72. The user can provide input using a virtual keyboard displayed on the display 70. Even though the virtual keyboard is used as the user retrieves information from the Internet 26, such as a web page, the user can receive the information at the display 70 of the terminal 20 in a full screen format. Full screen format is available because the UI framework 72 disappears when the user types a Universal Resource Locator (URL) or follows a hyperlink while navigating the Internet 26. In order to return to the UI framework 72, the user presses a button 80 and the virtual keyboard as well as the header and footer related to the services are presented again. Additionally, once the user presses the button 80 the web page, which was a full screen displayed prior to pressing the button 80, is reduced to a thumbnail view and positioned in the display 70, such as in the bottom left corner of the footer. Consequently, the user has a shortcut to quickly access the web page that was previously visited or to save that web page as a bookmark.

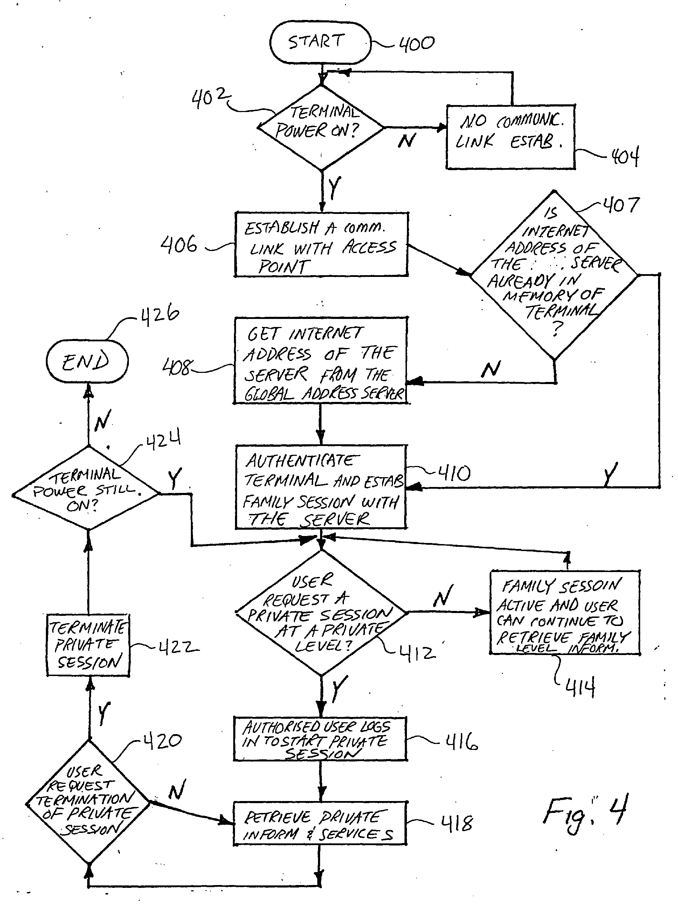

Referring now to Fig. 4, the process of authenticating a terminal at the shared level to initiate a shared session and authenticating the user at the individual level to initiate an individual session, beings at step 400. At step 402, it is determined whether the terminal is powered on. At step 404, if it is determined that the terminal is not powered on, then a communication link cannot be established through an access point to the server and, hence, the process returns to step 402 until the terminal is powered on. On the other hand, if the terminal is powered on, then the terminal establishes a connection to the access point and, hence, to an ISP and a global address server. At step 408, the terminal obtains the internet address of its server from the global address server.

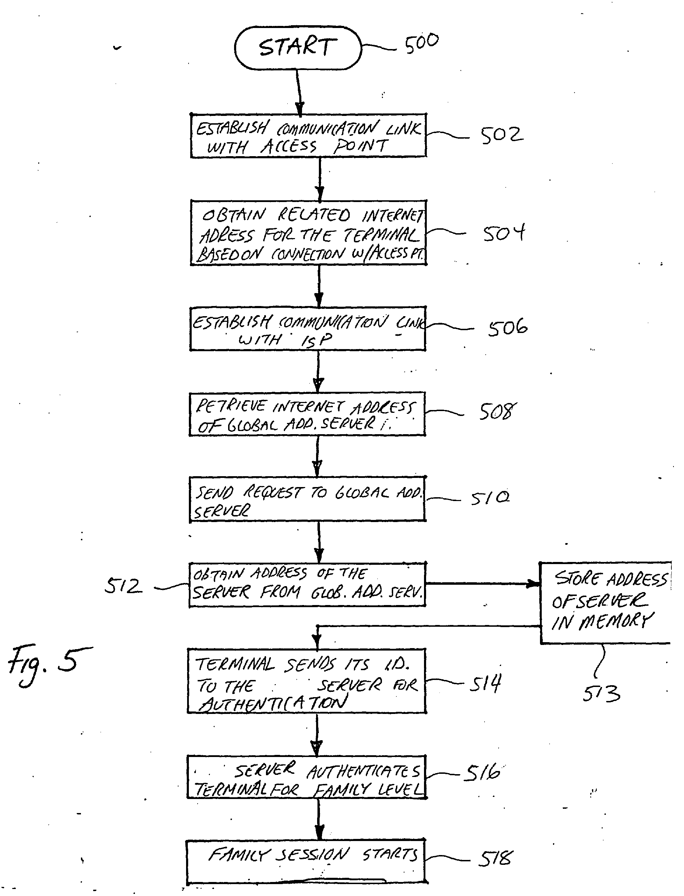

At step 410, the terminal communicates with the server and is authenticated as an authorised terminal with access to information and services at the shared level and the shared session begins and continues until the terminal is turned off. Additionally, the group profile is downloaded to the terminal when the shared session is active. Once the server recognises the terminal, establishing the shared session is an automatic background activity carried out by the terminal and transparent to the user, which is discussed with respect to Fig. 5. In order for the user to establish an individual session and access individual information and services, the user has to log in as an individual user at the individual level.

At step 412 it is determined if the user is an authorised individual user. At step 414, if the user is not authenticated as an individual user, then the user will only be given access to a shared session with the shared level information and services. On the other hand, at step 416, if the user is an authorised individual user, then an individual session is established and the user is allowed access to the individual information and services. Although the individual level information and services may be the same for all users, the content will vary from user to user.

At step 418, in the individual session the user retrieves information and uses the individual level services provided by the server. At step 420, it is determined if the user wants to terminate the individual session and return to the shared level. If it is determined that the user does not want to terminate the individual session, then the user continues the individual session at the individual level and the process returns to step 418. On the other hand, if it is determined that the user wants to terminate the individual session, then at step 422, the individual session is terminated and the user goes from the individual level to the shared level. At step 424, it is determined if the terminal is still powered on. If the terminal is powered on, then the process returns to step 412 with the user at the shared level in a shared session. Otherwise, if the terminal is turned off, then the shared session is also terminated that the terminal is logged off of the server and the process ends at step 426.

Thus, once the server authenticates the terminal, then a shared session begins at the shared level; once the user is recognised as an individual user, then an individual session is initiated. Consequently, an individual session remains in effect until the user explicitly terminates the individual session, whereas a shared session remains in effect until the terminal is turned off. Additionally, during a shared session when a predetermined period of time expires without any input from the user, then the terminal 20 can enter standby mode in order to conserve batter life until the terminal 20 receives an input from the user. Other features can be included, such as termination of the individual session if no input is received from the user after a predetermined period of time.

Referring now to Fig. 5, the process of establishing a communication link to an access point, step 406 of Fig. 4, and obtaining the internet address of an server for that terminal, step 408 of Fig. 4, for initiating a shared session at the shared level, begins at step 500. At step 502, the terminal establishes a communication link with the access point. At step 504, the terminal obtains its internet address from the access point based on the internet address of the access point with which the terminal has established the communication link. At step 506, the terminal establishes a communication link with the ISP coupled to the access point. At step 508, the terminal retrieves the internet address of the global address server from its memory. At step 510, the terminal sends a request to the global address server for the internet address of the server that is associated with the terminal. At step 512, the global address server returns the internet address of the appropriate server to the terminal. At step 514, the terminal sends its identification information to the server located at the internet address provided by the global address server in order to establish a communication link with the server. At step 516, the server authenticates the terminal and a shared session at the shared level is established between the server and the terminal.

Although described in the context of particular embodiments, it will be apparent to those skilled in the art that a number of modifications to these teachings may occur. Thus, while the invention has been particularly shown and described with respect to one or more preferred embodiments thereof, it will be understood by those skilled in the art that certain modifications or changes, in form and shape, may be made therein without departing from the scope of the invention claimed hereafter.

## Claims

1. A network for providing a user with a communication session that includes information management services and internet access, wherein the network comprises:
at least one terminal that is part of a group and capable of wireless communication, the terminal comprising:
a driver resident on hardware circuitry; and
a display coupled to the circuitry having a viewable area for visual display of data, wherein the viewable area is divided into regions that can be used for spatial orientation of information;
a gateway coupled to the terminal for providing a wireless communication link to the terminal;
an Internet Service Provider (ISP) coupled to the gateway for providing Internet access;
a server coupled to the gateway for authenticating the terminal and providing information management services; and
a global unit coupled to the gateway for providing the internet address of the server to the terminal, wherein activation of the terminal initiates a request to the server for authentication of the terminal in order to establish a shared communication session.

2. The network of claim 1, wherein the user of the terminal can initiate a request for an individual communication session with the server.

3. The network of claim 1, wherein the terminal comprises:
an operating system including a driver resident in hardware of the operating system;
a touch sensitive display coupled to the operating system for graphical display of information, wherein the information includes bookmarks and history; and
a user interface coupled to the operating system for providing the user with selection and input control.

4. The network of claim 3, wherein the display can receive users input through a virtual keyboard.

5. The network of claim 1, wherein the server comprises:
a support server coupled to the ISP for providing the user with information management services, including access to messaging services;
a directory server coupled to the support server for providing directory services including authentication of the terminal and the user; and
an application server coupled to the directory server for providing application specific services.

6. The network of claim 5, wherein the terminal is authenticated by the support server for starting the shared communication session and the user is authenticated by the support server for starting an individual communication session.

7. The network of claim 5, wherein the application server transmits a group profile to the terminal when a shared communication session is active and transmits an individual profile specific to the user that initiated an individual communication session when the individual communication session is active.

8. The network of claim 5, wherein the global unit comprises:
a firewall unit for providing secured access to the global unit;
a global address server for storing the internet address of the server associated with the terminal; and
a global upgrade server coupled to the global address server for providing updated data including software to the server and the terminal.

9. The network of claim 5, wherein the support server comprises:
an application server;
an upgrade service unit couple to the application server for receiving software upgrades from the global upgrade server;
a login service unit couples to the application server for authenticating the terminal for the shared session and the user for an individual communication session;
a profile service unit couples to the application server for providing and updating shared session profiles and individual session profiles;
an administrative service unit couples to the application server for administration of the support server and the network application server; and
an advertisement service unit couples to the application server for configuring advertised services to the appropriate profile associated with the session that is active on the terminal.

10. A method for providing a user with spatial storage of bookmarks on a display of a terminal with wireless access to the internet, the method comprising:
retrieving a desired web page; and
storing the web page as a bookmark on the display in a desired region of the display, such that the spatial location and orientation of the bookmark on the display acts a reminder of the content of the bookmark.

11. The method of claim 10, further comprising downloading a desired spatial organisational scheme as part of a group profile for configuration of the terminal.

12. The method of claim 10, further comprising:
determining if the user has requested an individual communication session;
authenticating the user to establish the individual communication session; and
terminating the individual communication session and returning to the shared communication session.

13. The method of claim 12, further comprising downloading a desired spatial organisational scheme as part of an individual user profile for configuration of the terminal.

14. The method of claim 10, further comprising:
establishing a communication link between the terminal and an Internet Service Provider;
retrieving an internet address of a global address server;
sending a request to the global address server, wherein the request is a request for a server's internet address;
receiving the internet address of the server from the global address server;
transmitting identification information unique to the terminal and an internet address of the terminal from the terminal to the internet address of the server for authentication of the terminal by the server; and
establishing a shared communication session.

15. A system for providing a user with wireless internet access and information management through a gateway coupled to an internet service provider, the system comprising:
a terminal coupled to the gateway, wherein the terminal is recognised by the server as belonging to a group, the terminal comprising:
a driver resident on hardware circuitry; and
a display coupled to the circuitry having a viewable area for visual display of data, wherein the viewable area is divided into regions that can be used for spatial orientation of information; and
a server coupled to the gateway, wherein the server authenticates the terminal and establishes a shared communication session with the terminal in order to provide access to group services to the user.

16. The system of claim 15 wherein the server comprises:
an internet service provider coupled to the gateway and the internet; and
a mobile display appliance server coupled to the gateway for providing access to group and individual profiles.

17. The system of claim 15 further comprising an internet service provider coupled to the gateway for providing access to the internet and the internet address for the terminal relative to the internet service provider.

18. The system of claim 15 further comprising a business owner coupled to the gateway for providing an internet address associated with the server to the terminal and provide update data to the server.

19. The system of claim 15 wherein a spatial scheme for presentation and storage of information is downloaded as part of a group profile.

20. The system of claim 19, wherein the user is authenticated as an individual user within the group and an individual communication session is established to allow the user to access individual information and data and wherein an individual profile comprising orientation of information on the display for the individual user is downloaded to the terminal.

21. A user terminal configured to perform a method of providing bookmarks as claimed in any one of claims 10 to 14.
